# EUROPEAN PATENT APPLICATION

(11) **EP 2 604 555 A1**
(43) Date of publication of application: **19.06.2013**
(21) Application number: 12197506.4
(22) Date of filing: 17.12.2012
(51) Int. Cl.: B65G 69/16, B65B 25/04

(54) **Station and method for filling product containers**

(30) Priority: 16.12.2011 NL 2007982
(71) Applicant: Petter, Hendrik, 8309 CM Tollebeek (NL)
(72) Inventor: Petter, Hendrik, 8309 CM Tollebeek (NL)
(74) Representative: Klavers, Cornelis

(57) **Abstract**

A filling station (1) for product holders (2) comprises: a product supply line (A), and a bunker (3) which is situated underneath the supply line (A) and which comprises walls which are adjustable in length, and which during length adjustment are movable in the product holders (2), between which walls an operable bunker valve is provided. In a method for filling holders (2) with products via a bunker (3) and an operable bunker valve provided at the bottom of the bunker (3), the bunker (2) is filled with products during the length adjustment of walls of the bunker (2) and a bunker valve arranged at the bottom of the adjustable walls of the bunker (3) is moved to the bottom of the holder (2). By virtue thereof, bruising of the products is prevented, while a gain of time and a high throughput can be realized.

## Description

The present invention relates to a filling station for filling product holders with products, and to a method of filling such product holders with products.

Such a filling station and such a method are well known. They require personnel making use of a fork-lift truck to carry a product holder in the form of a case to a position close to the outlet opening situated on the lower side of a buffer having a constant volume and then lift the case in order to limit the drop height of the usually vulnerable product and hence preclude damage and bruising as much as possible. Subsequently, the product supply line is stopped, allowing the product holder positioned underneath it, and into which the buffer has been lowered, to be filled. Next, the buffer is moved back to its starting position, the supply line is started again, and the filled holder is carried away and a next, empty holder is brought. This is not only time-consuming, in particular standstill time having a negative effect on the throughput, but also requires personnel and the vehicle as mentioned hereinabove.

It is an object of the present invention to provide a more efficient filling station and a more efficient method, allowing the use of manpower to be reduced, while still limiting the drop height of products and offering possibilities to increase throughput.

To achieve this, the filling station according to the invention is **characterized in that** it comprises: a product supply line, and a bunker which is situated underneath the supply line and which comprises walls which are adjustable in length, and which during length adjustment are movable in the product holders, between which walls an operable bunker valve is provided.

The corresponding method is characterized according to the invention in that holders are filled with products via a bunker and an operable bunker valve provided at the bottom of the bunker, and during the length adjustment of walls of the bunker being filled with product, the bunker valve arranged at the bottom of the adjustable walls is moved to the bottom of the holder.

An advantage of the filling station and the method according to the invention is that already when the bunker is being filled and expands in volume during the simultaneous length adjustment of the bunker walls, the bunker valve is lowered to the bottom of the product holder. When the bunker is being filled, the bunker walls are lowered into the product holder, so that, when the bunker is full, the bunker valve, which is close to the bottom then, can be opened, thus allowing the product to flow from the bunker into the product holder with the desired minimal drop height. Consequently, the bunker walls can already be retracted then and moved upwards, and the bunker can be filled immediately with new product. As a result, the filling station according to the invention enables both time and energy to be saved, because the operations of lifting and putting down again carried out during the filling process by personnel are no longer necessary.

Advantageously, the filling station according to the invention also offers greater flexibility, since it offers more possibilities to carry out the above in the case of continuous supply of products, as well the possibility of shaking the upright positioned product holders. By virtue thereof, densification of the product and an optimum degree of filling of the holders is achieved, and the so-termed filling cone at the top of the filled holder is leveled off and disappears.

Irrespective of the volume of the product holders to be filled with product, the drop height is always minimal, both when the product is poured from the supply line into the bunker between the shortened bunker walls and when the product is subsequently poured from the expanded-volume bunker into the holder.

In possible embodiments, the walls, which are usually constructed as extensible walls and/or as mutually movable wall segments, are designed in various constructionally simple mutually engaging ways.

An embodiment of the filling station according to the invention is **characterized in that** the filling station comprises a buffer arranged between the supply line and the bunker.

Arranging the buffer at said location in the filling station according to the invention has the advantage that the products can be poured thereon, weighed and buffered, i.e. they are temporarily stored there and subsequently supplied in smaller batches and weighed layers to the bunker whose length is adjustable. When the bunker is full, product is supplied to the product holder as has already been briefly explained hereinabove.

An embodiment of the invention which currently merits preference is **characterized in that** the filling station is provided with a conveyor belt which is connected to the supply line and which can be moved in its entirety in a horizontal plane.

By applying the conveyor belt, the advantage is achieved that the continuous supply of products via the supply line is made possible in a simpler way because said conveyor belt is used as a temporary storage place of product during the time that the bunker is lowered, fills the holder and/or is moved back upwards. By virtue of the fact that the conveyor belt is temporarily used as a buffer during the short time that the bunker cannot be filled, there is no loss of time. As a result, the time-consuming process of stopping the supply line carrying products and subsequently putting it back in motion again belong to the past. In addition, the buffer mentioned in the previous embodiment may possibly not require a buffer valve in the bottom thereof.

A special embodiment of the filling station according to the invention is **characterized in that** the filling station comprises, between the supply line and the buffer, or, if appropriate, the conveyor belt provided therein, an auxiliary conveyor belt.

This slightly further increases the flexibility of the filing station because in the case of a required layer-wise uniform supply of more delicate products such as endive points to the bunker, the auxiliary conveyor belt can be briefly used as a temporary buffer before such products are poured onto the conveyor belt. In addition, said auxiliary conveyor belt also provides for a better distribution of products on the conveyor belt, and hence also for a more level distribution of products in the holders.

Further, detailed, possible embodiments are mentioned together with the associated advantages in the following description.

Next, the filling station as well as the method according to the present invention will be explained in greater detail with reference to the accompanying figures, in which corresponding parts are indicated by means of the same reference numerals.

In the drawings:
Figure 1 shows a preferred embodiment of the filling station according to the invention in which the expanded bunker has bunker walls which are maximally adjusted in length; and
Figures 2 and 3 show the filling station of figure 1 with respectively 50% extended and minimally extended bunker walls;
Figure 4 shows a perspective representation of the filling station according to the invention; and
Figure 5 show a system provided with the filling station according to figure 1 and arranged to carry out the method according to the invention.

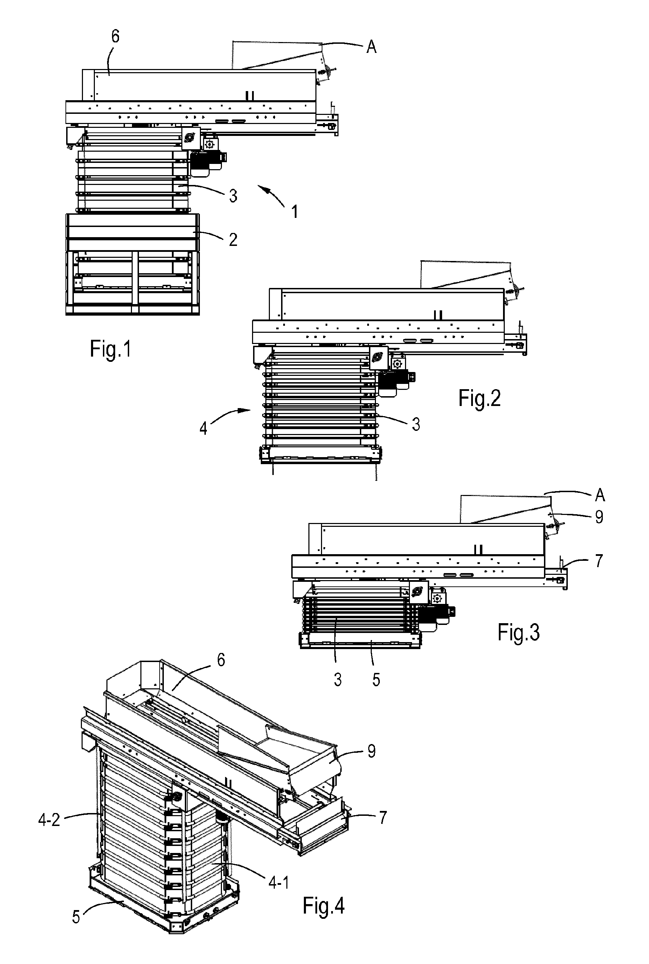

Figure 1 shows a filling station 1 for holders 2 of products, also referred to as product holders. Such holders 2 are, for example, cases, bins or big bags for, for example, bulk goods or loose products, such as agricultural products, i.e. bulbous plants, tuberous plants or root-shaped plants. For the sake of brevity, the following description focuses on cases shown in the various figures.

The filing station 1 shown has a supply line, schematically indicated by means of A, for bulk product or other products. Under the supply line A there is a bunker 3 which, at least at the bottom part thereof, has a dimension that falls within the holder 2, which may be for example a bag or a case. The bunker 3 is of the type that is provided with length- adjustable walls 4 which are constructed so as to be movable in the product holders during said adjustment in length, which are individually referenced 4-1, 4-2. The cross-section of at least the adjustable part of the bunker 3 is often polygonal, oval or round and will usually be adapted to the shape and dimensions of the filling hole of the case 2. In the bottom part of the maximally extended bunker 3 shown in figure 1, where the lowermost end portions of the maximally extended walls reach as far as the bottom of the case 2, there is a bunker valve 5 which is usually operable by means of electronic process control enabling the valve to be opened and closed.

In the situation of fig. 2, the length of the retractable, for example foldable, bunker 3 is 50%. Fig. 3 shows the situation where the bunker walls 4 have a minimal height and where, during filling the bunker from the supply line A, the products fall into the retracted bunker 4 from a minimal height. During the further filling of the bunker 3, the length of the wall 4 adapts, or the lengths of all wall segments adapt, to the degree of filling of the bunker 3, so that, irrespective of said degree of filling, the products drop only over a minimal distance, and hence the risk of bruising is only small. If, in this embodiment, the bunker is in the extended position, as shown in figures 1 and 4, then the extended bunker projects into the case 2, so that after opening the bunker valve 5, the product again flows from minimal height into the case 2. Subsequently, the bunker is retracted (fig.3) and the filling process from the supply line A starts anew, etcetera.

The embodiment of the retractable bunker 3 can be realized in many ways. For example, the walls, if they consist of wall segments, can be composed of wall segments moving towards each other or away from each other. These segments may be sliding segments, obliquely overlapping segments or, for example, partially ringshaped or polygonal, mutually movable wall segments which usually partially engage one another. The wall segments can be movable by engaging one another, such as the segments of a folding wall, pliable panel wall or sliding panel wall. The walls or wall segments can be made of, inter alia, a flexible material, such as cloth, preferably of synthetic resin, and then form for example the pleated parts of a skirt. A flexible material, such as cloth, is preferred in cases where earth is expected to adhere to the product. By using such material, earth detaches more easily, so that it too ends up in case 2 and does not jam or clog the station 1.

A subsequent embodiment which will be explained with reference to the figures is a version where the filling station 1 comprises a buffer 6 provided between the supply line A and the bunker 3. Such a buffer 6 may comprise, in the bottom thereof, a buffer valve, so that only a command from said process control can cause the products supplied via the supply line A to be temporarily stored in the buffer 6, before they are poured into the initially retracted bunker 3, which, when it is being filled, will adapt its length dimension usually under the control of sensors arranged in the bunker. In general it applies that the more compact the various parts of the filling station 1 are, the smaller will be the drop height of the product.

A particular embodiment is one in which it is possible, but not necessary, to replace the buffer valve by a conveyor belt 7 arranged in or close to the buffer 6, on which conveyor belt products are buffered, for example during filling process cycles where it is undesirable to fill the buffer 6.

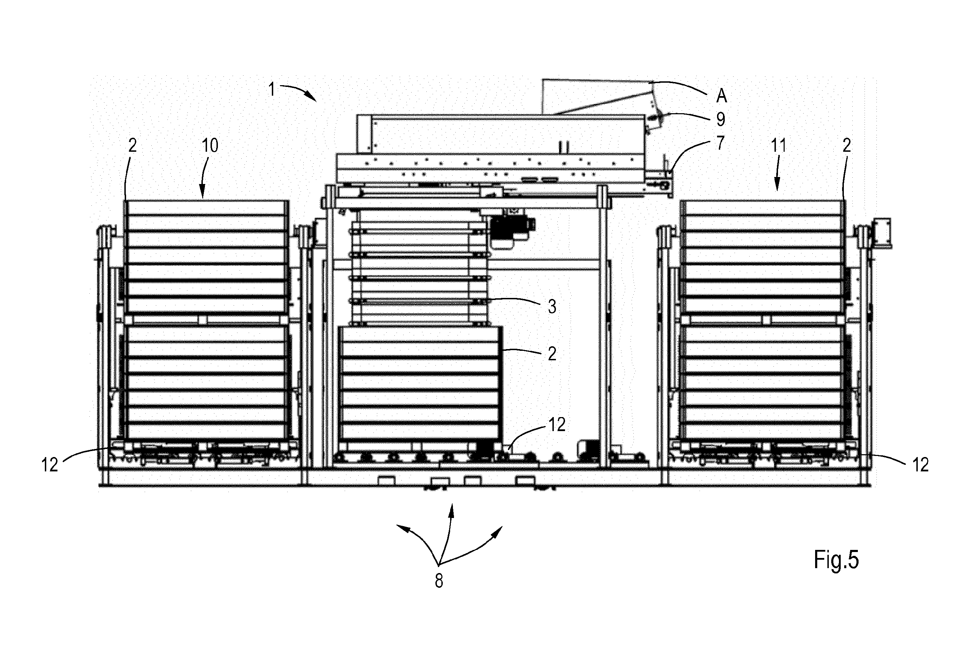

In a further embodiment, the conveyor belt 7 connected to the supply line A is a conveyor belt 7 which is movable, possibly in its entirety, in a horizontal plane. The conveyor belt buffer can then be filled by causing it to rotate and/or by shifting or otherwise moving the belt. By virtue thereof the degree of flexibility of the filling process is increased, particularly if this is incorporated in a system 8 which will be explained hereinafter and which is schematically shown in figure 5. In addition, this flexibility is important with a view to achieving a high throughput within a short period of time, which is desired in practice, and wherein the need to stop and restart a continuous stream of products from the supply line A is undesirable. By making the cross-section of the belt, i.e. the section at right angles to the direction of rotation of the conveyor belt 7, slightly convex, the product is better distributed in the width direction of the belt, which eventually results in a better distribution, a more uniform level fill without cones resulting from pouring, of the product in bunker 3 and case 2.

In this context, sometimes an embodiment is required in which the filling station comprises an auxiliary conveyor belt 9 arranged between the supply line and the buffer or the conveyor belt incorporated therein. This can be used to fill the reciprocatable belt 7 which is subsequently emptied on the auxiliary conveyor belt by causing the latter to rotate. Consequently, if required, products can be temporarily buffered also on belt 9, which even better ensures a continuous supply via line A.

The elucidated method already implicitly explained hereinabove can be advantageously combined with a shaking movement of the case 2 when it is being filled, resulting in an efficiently filled case 2.

The system 8 briefly mentioned hereinabove, in which the method can also be applied by means of the filling station, comprises a supply station 10 for empty holders 2, the filling station 1 and a discharge station 11 for the filled holders 2. The various stations of such a system can be readily modularly built up and disassembled or exchanged for another station, and they can be used as stand-alone units if required. The cycles of such a system 8 can be controlled and regulated in a substantially automated manner by means of an electronic processor, known per se, which is influenced by sensors positioned at various locations in the system. By means of one or more roller conveyors 12 of the system which is further provided with automatic lifting means 13, the various holders 2 can be supplied or discharged and stacked. As explained hereinabove, the roller conveyor 12 under the filling station 1 which may or may not be adjustable for height, may be, if required, an oscillatory roller conveyor.

If required, the weighing of the product may also be performed in the bunker.

## Claims

1. A filling station for product holders which comprises:
- a product supply line, and
- a bunker which is situated underneath the supply line and which comprises walls
which are adjustable in length, and which during length adjustment are movable in the product holders, between which walls an operable bunker valve is provided.

2. The filling station according to claim 1, **characterized in that** the walls are composed of wall segments moving towards each other or away from each other.

3. The filling station according to claim 1 or 2, **characterized in that** the wall segments are constructed so as to be movable by engaging one another, such as the segments of a folding wall, pliable panel wall or sliding panel wall.

4. The filling station according to any one of claims 1 to 3, **characterized in that** the walls or wall segments are made of a flexible material, such as cloth, preferably of synthetic resin.

5. The filling station according to any one of claims 1 to 4, **characterized in that** the filling station comprises a buffer arranged between the supply line and the bunker.

6. The filling station according to claim 5, **characterized in that** the filling station is provided with a conveyor belt which is connected to the supply line and which can be moved in a horizontal plane.

7. The filling station according to claim 5 or 6, **characterized in that** the filling station comprises, between the supply line and the buffer, or, if appropriate, the conveyor belt provided therein, an auxiliary conveyor belt.

8. The filling station according to any one of claims 1 to 7, **characterized in that** the product holders are cases, bins or big bags for, for example, bulk goods or loose products, such as agricultural products, namely bulbous plants, tuberous plants or root-shaped plants.

9. A method wherein holders are filled with products via a bunker and an operable bunker valve provided at the bottom of the bunker, and during the length adjustment of walls of the bunker being filled with product, the bunker valve arranged at the bottom of the adjustable walls is moved to the bottom of the holder.

10. The method according to claim 9, **characterized in that** the holder is shaken, at least, when it is being filled.

11. The method according to claim 9 or 10, **characterized in that** under continuous supply of product to a buffer to be filled, a conveyor belt arranged therein is shifted, causing product to be temporarily buffered thereon until the bunker walls have been retracted to a minimal length, after which the bunker is filled with product also from the buffer.

12. The method according to any one of claims 9 to 11, **characterized in that** the method is carried out by means of a system comprising:
- a supply station for empty holders,
- a filling station according to any one of claims 1 to 8, wherein the holders are filled, and
- a discharge station for filled holders.

13. The method according to claim 12, **characterized in that** the various stations operate at least semiautomatically.

14. The method according to claim 13, **characterized in that** the holders are supplied or discharged on one or more roller conveyors of the system.

15. The system comprising:
- a supply station for empty holders,
- a filling station according to any one of claims 1 to 8, wherein the holders are filled,
- a discharge station for filled holders, and
- a sensor-controlled, electronically regulated processing and control unit which is arranged to carry out the method according to any one of claims 9 to 14.
